# EUROPÄISCHE PATENTSCHRIFT

(11) **EP 3 452 424 B1**
(45) Veröffentlichungstag und Bekanntmachung des Hinweises auf die Patenterteilung: **29.04.2020**
(21) Anmeldenummer: 17709405.9
(22) Anmeldetag: 03.03.2017
(51) Int. Cl.: F27D 15/02, C04B 7/47, C04B 7/52, F27D 17/00

(54) **VERFAHREN UND ANLAGE ZUR HERSTELLUNG VON ZEMENT**
METHOD AND PLANT FOR THE PRODUCTION OF CEMENT
PROCÉDÉ ET INSTALLATION DE FABRICATION DE CIMENT

(30) Priorität: 04.05.2016 DE 102016207720
(43) Veröffentlichungstag der Anmeldung: 13.03.2019
(73) Patentinhaber: thyssenkrupp Industrial Solutions AG, 45143 Essen (DE); thyssenkrupp AG, 45143 Essen (DE)
(72) Erfinder: BRINKMANN, Christian, 33611 Bielefeld (DE); UHDE, Martin, 59320 Ennigerloh (DE); WILLMS, Eike, 44309 Dortmund (DE)
(74) Vertreter: thyssenkrupp Intellectual Property GmbH
(86) Internationale Anmeldenummer: PCT/EP2017/055018
(87) Internationale Veröffentlichungsnummer: WO 2017/190865

(56) Entgegenhaltungen:
- EP-A1- 2 980 036
- EP-A2- 0 629 448
- WO-A2-2007/141307
- JP-B2- H 068 195

## Beschreibung

Die Erfindung betrifft eine Anlage sowie ein Verfahren zur Herstellung von Zement, insbesondere Weißzement.

Schüttgüter, die durch Oxidation Schaden nehmen oder an Qualität verlieren, werden in einer inerten, insbesondere nicht oxidierenden Atmosphäre, bearbeitet. Bei der Herstellung von hellen Zementen, insbesondere Weißzement, wird üblicherweise Zementrohmehl in einem Drehrohrofen zu Zementklinker gebrannt und anschließend in einer Zerkleinerungseinrichtung zerkleinert. Ein Verfahren zur Herstellung von Weißzement ist beispielsweise in der CH355073 A offenbart. Auch die JP H06 8195 B2 offenbart eine Anlage zur Herstellung von Weißzement, wobei die Kühlung durch Besprühen des Zementklinkers mit Wasser erfolgt. Aus der EP 0 629 448 A2 ist eine Klassierung des Materials in zwei Korngrößen zur Optimierung einer Mahlanlage bekannt.

Der Klinker wird in bekannten Anlagen zur Herstellung von Weißzement im heißen Zustand direkt im Anschluss an den Drehrohrofen zerkleinert und anschließend in inerter Atmosphäre abgekühlt. Eine Zerkleinerung der groben Fraktion vor der Abkühlung des Klinkers bietet den Vorteil, dass eine vollständige Abkühlung des Klinkers möglich ist. Da die Anzahl großer Partikel im Produkt gering ist, wird üblicherweise eine bessere Weiße erzielt als bei derselben Anlagenkonfiguration mit einer der inerten Kühlung nachgeschaltetem Brecher. Die Zerkleinerungseinrichtung ist dabei sehr hohen Temperaturen von bis zu etwa 1350°C ausgesetzt, was eine aufwendige und kostenintensive Herstellung der Zerkleinerungseinrichtung, einen hohen Verschleiß der Brechwerkzeuge und damit oft einen unterjährigen Tausch der Brechwerkzeuge und die Lagerhaltung mindestens der Brechwalzen oder eines vollständigen Austauschaggregates bedingt. Dies führt zu einer geringeren Verfügbarkeit der Gesamtanlage.

Eine Zerkleinerung des Klinkermaterials im Anschluss an eine direkte Kühlung des Klinkermaterials nach dem Austritt aus dem Drehrohrofen führt üblicherweise zu einer Oxidation der Metallbestandteile zu beispielsweise Eisenoxid, was zu einer dunkleren Färbung des Zementklinkers führt. Es ist daher notwendig, eine relativ aufwendige und kostenintensive Kühlung und Zerkleinerung des Materials in inerter Atmosphäre, unter Ausschluss von Sauerstoff durchzuführen, um die weiße Farbe des Zements zu erhalten.

Davon ausgehend ist es Aufgabe der vorliegenden Erfindung, ein Verfahren und eine Anlage zur Herstellung von Zement, insbesondere Weißzement, anzugeben, die kostengünstiger ist und einen geringeren Energieaufwand mit sich bringt.

Diese Aufgabe wird erfindungsgemäß durch ein Verfahren mit den Merkmalen des unabhängigen Verfahrensanspruchs 1, sowie durch eine Vorrichtung mit den Merkmalen des unabhängigen Vorrichtungsanspruchs 9 gelöst. Vorteilhafte Weiterbildungen ergeben sich aus den abhängigen Ansprüchen.

Ein Verfahren zur Herstellung von Zement, insbesondere Weißzement umfasst nach einem ersten Aspekt zumindest die folgenden Schritte:
- thermisches Behandeln von Material in einem Ofen und
- Kühlen des Materials in inerter Atmosphäre in einer Kühleinrichtung, wobei
das Material im Anschluss an die inerte Kühlung in einer Klassierungseinrichtung in zumindest zwei Korngrößen, Grobgut und insbesondere flugfähiges Feingut klassiert wird und wobei das Feingut im Anschluss an das Klassieren separat von dem Grobgut gekühlt wird.

Unter Weißzement wird insbesondere Zement verstanden, der einen geringen Gehalt an Eisenoxid von etwa Fe203 < 0,4% bezogen auf die glühverlustfreie Rohmischung aufweist. Insbesondere weist Weißzement geringe Anteile von Mangan-, Chrom- und Magnesium-Oxid von etwa Mn203 < 0,02%, Cr203 < 0,01% MgO < 3% bezogen auf die glühverlustfreie Rohmischung auf.

Bei dem Ofen handelt es sich vorzugsweise um einen Drehrohrofen, in dem Zementrohmehl zu Zementklinker gebrannt wird. Insbesondere wird das aus dem Ofen austretende Material direkt der Kühleinrichtung zur Kühlung in inerter Atmosphäre zugeführt. Das Material wird insbesondere des Weiteren in einem dem Ofen vorgeschalteten Vorwärmer vorzugsweise mit Calcinator erwärmt und entsäuert, wobei die Abgase des Ofens beispielsweise dem Calcinator und anschließend dem Vorwärmer zugeführt werden, sodass das den Vorwärmer durchlaufende Material im Gegenstrom erwärmt wird.

Bei der Kühleinrichtung handelt es sich beispielsweise um eine Kühltrommel, der ein Kühlmittel, wie beispielsweise Wasser, zur Kühlung des Materials zugeführt wird. Die Kühlung des Materials in der Kühleinrichtung erfolgt in inerter Atmosphäre. Darunter ist eine sauerstoffarme Umgebung, beispielsweise eine Wasserdampfatmosphäre, zu verstehen, wobei eine Oxidation des Metallanteils, insbesondere Eisen, Mangan, Chrom und/ oder Magnesium, des Materials vermieden wird. Die Kühleinrichtung ist insbesondere derart ausgebildet, dass das Material in der Kühleinrichtung getrocknet wird und/ oder vorzugsweise mit geringer Restfeuchte ausgetragen wird.

Die Kühleinrichtung ist insbesondere derart ausgebildet, dass sie das Material mit einer Korngröße von größer als 250µm bis 1000µm auf eine Temperatur von etwa 100°C bis 700°C, insbesondere 180°C bis 500°C abkühlt. Insbesondere ist die Kühleinrichtung derart ausgebildet, dass sie das Material mit einer Korngröße von weniger als 250 µm bis 1000µm, vorzugsweise 0 µm bis 500 µm auf eine Temperatur abkühlt, bei welcher eine Oxidation, insbesondere des Eisen-, Mangan-, Chrom- und/ oder Magnesium-Anteils des Materials, bei einer weiteren Kühlung ausgeschlossen oder sehr gering ist. Ein Verlust an Weiße des Fertigguts wird dadurch ausgeschlossen oder stark vermindert. Vorzugsweise ist die Kühleinrichtung derart betreibbar und ausgebildet, dass sie die Oberfläche des Material mit einer Korngröße größer als 250µm bis 1000µm auf eine Temperatur von etwa 100°C bis 700°C, insbesondere 150°C bis 500°C, vorzugsweise 160°C bis 180°C abkühlt, wobei die Kerntemperatur des Materials oberhalb der genannten Temperatur liegt.

Eine Klassierung des Materials in der Klassierungseinrichtung ermöglicht eine gezielte weitere Bearbeitung des Grobguts des Materials, das einer Zerkleinerung bedarf, und einer davon getrennten Bearbeitung des Feinguts, das beispielsweise lediglich einer weiteren Kühlung bedarf. Insbesondere wird ausschließlich der Feingutanteil des Materials einer weiteren Kühlung mit einem Gasstrom zugeführt, wobei der Grobgutanteil insbesondere einer Zerkleinerungseinrichtung und/ oder einer weiteren inerten Kühlung zugeführt wird. Dies ermöglicht eine kleinere Dimensionierung der inerten Kühleinrichtung, in der im Anschluss an den Ofen sowohl das Grobgut als auch das Feingut gemeinsam gekühlt werden. Insbesondere wird das Feingut in der Kühleinrichtung auf eine Temperatur von etwa 100°C bis 700°C, insbesondere 150°C bis 500°C, vorzugsweise 160°C bis 180°C abgekühlt, wobei das Feingut bis in den Kern auf die voran genannte Temperatur abgekühlt ist.

Insbesondere weist das Feingut des Materials beim Verlassen der Kühleinrichtung eine geringere Temperatur auf als das Grobgut. Bei einer Temperatur des Grobguts von mehr als 600°C ist eine Beeinflussung des Weißegerades des Gesamtproduktes noch möglich. Eine getrennte Kühlung des Grobguts und des Feinguts bietet daher zusätzlich den Vorteil, dass dem Feingut keine weitere Wassermenge zugeführt wird, was zu einem hohen Feuchtegrad und Schwierigkeiten bei der Verpackung des Materials führen kann.

Die Klassierungseinrichtung umfasst gemäß einer weiteren Ausführungsform einen Sichter, insbesondere einen statischen und/ oder dynamischen Sichter, wobei das Material mit einem Gasstrom beaufschlagt wird, sodass das insbesondere flugfähige Feingut von dem insbesondere nicht flugfähigen Grobgut getrennt wird. Beispielsweise weist die Klassierungseinrichtung eine im Wesentlichen senkrechte Rohrleitung auf, in der das Material im Gegenstrom mit einem Gasstrom beaufschlagt wird, wobei das schwerere Grobgut gegen den Gasstrom und das Feingut mit dem Gasstrom die Rohrleitung verlässt. Beispielsweise umfasst die Klassierungseinrichtung einen dynamischen oder einen statischen Sichter oder eine Kombination aus diesen. Das Feingut weist beispielsweise ein Korngröße von weniger als 250 µm bis 1000µm, vorzugsweise 0 µm bis 500 µm und das Grobgut eine Korngröße von größer als 250 µm bis 1000 µm auf. Eine Sichteinrichtung bietet die Möglichkeit, Feingut mit einer geringen Korngröße, das insbesondere flugfähig ist, von dem Grobgut zu trennen. Durch die Einstellung der Strömungsgeschwindigkeit des Gasstroms ist der Trennschnitt der Klassierungseinrichtung einstellbar, sodass beispielsweise bei einer geringeren Leistung der inerten Kühleinrichtung, Feingut kleinerer Korngröße von dem Grobgut klassiert wird.

Die Klassierung umfasst gemäß einer weiteren Ausführungsform eine Kühlung des Feinguts mittels Kühlluft. Der Gasstrom der Klassierungseinrichtung weist vorzugsweise eine geringere Temperatur auf als das zu klassierende Material, sodass der Gasstrom in der Klassierungseinrichtung eine Kühlung des Materials bewirkt.

Gemäß einer weiteren Ausführungsform erfolgt eine Kühlung des Feinguts im Anschluss an das Klassieren in einem Fliehkraftabscheider, insbesondere einem Zyklonkühler, und/oder einer Sichteinrichtung. Des Weiteren wird in dem Fliehkraftabscheider der Gasstrom von dem Feingut getrennt. In der der Klassierungseinrichtung nachgeschalteten Kühlung erfolgt ausschließlich eine Kühlung und / oder Trocknung des Feinguts, die räumlich getrennt von einer optionalen Kühlung des Grobguts erfolgt.

Die Kühlung des Feinguts erfolgt im Anschluss an das Klassieren in zumindest zwei Kühlstufen, wobei jede Kühlstufe einen Fliehkraftabscheider und/oder eine Sichteinrichtung umfasst. Vorzugsweise ist eine Mehrzahl von Kühlstufen der Klassierungseinrichtung nachgeschaltet, die jeweils einen Fliehkraftabscheider und/oder eine Sichteinrichtung umfassen.

Gemäß einer weiteren Ausführungsform wird das Material vor dem Klassieren zerkleinert. Vorzugsweise wird das Material in einer inerten Zerkleinerungseinrichtung unter Ausschluss von Sauerstoff zerkleinert, sodass die weiße Farbe des Zements erhalten bleibt. Eine inerte Zerkleinerung des Grobguts nach der Klassierung ist ebenfalls denkbar. Insbesondere wird das Grobgut im Anschluss an die Klassierungseinrichtung einer weiteren inerten Kühleinrichtung und anschließend beispielsweise einer inerten Zerkleinerungseinrichtung zugeführt. Auch ist es denkbar, das Grobgut im Anschluss an die Klassierung in einer inerten Zerkleinerungseinrichtung zu zerkleinern und anschließend auf eine Temperatur von 100°C bis 700°C, insbesondere 150°C bis 500°C, vorzugsweise 160°C bis 180°C zu kühlen, sodass eine weitere Oxidation des Grobguts nicht oder nur in einem sehr geringen Maße erfolgt.

Die Abluft des zumindest einen Fliehkraftabscheiders und/oder die Abluft der Kühleinrichtung werden gemäß einer weiteren Ausführungsform einem Wärmetauscher zugeführt und in dem Wärmetauscher erwärmt. Insbesondere wird der erwärmte Gasstrom anschließend dem Ofen als Ofenzuluft zugeführt. Die Nutzung der Abluft des zumindest einen Fliehkraftabscheiders und/oder die Abluft der Kühleinrichtung als Ofenzuluft bietet den Vorteil, dass diese bereits durch den Wärmeübergang des zu kühlenden Materials erwärmt ist und die Temperaturdifferenz zu der in dem Ofen benötigten Zuluft geringer ist als bei der Verwendung von Umgebungsluft als Ofenzuluft.

Das Material wird gemäß einer weiteren Ausführungsform vor der thermischen Behandlung in dem Ofen in einem Vorwärmer erwärmt und das Abgas des Vorwärmers wird dem Wärmetauscher zur Erwärmung der Abluft des Fliehkraftabscheiders und/oder der Abluft der Kühleinrichtung zugeführt wird. Eine Nutzung des Vorwärmerabgases zur Erwärmung der Abluft des zumindest einen Fliehkraftabscheiders und/oder der Abluft der Kühleinrichtung bietet eine energieeffiziente Möglichkeit der Bereitstellung von Ofenzuluft.

Die Erfindung umfasst ferner eine Anlage zur Herstellung von Zement, insbesondere Weißzement, aufweisend einen Ofen zur thermischen Behandlung eines Materials und eine in Strömungsrichtung des Materials dem Ofen nachgeschaltete inerte Kühleinrichtung zur Kühlung des Materials in inerter Atmosphäre, wobei der Kühleinrichtung eine Klassierungseinrichtung nachgeschaltet ist zum Klassieren des Materials in zumindest zwei Korngrößen, Grobgut und Feingut und wobei der Klassierungseinrichtung zumindest eine Kühlstufe zur Kühlung des Feinguts separat von dem Grobgut nachgeschaltet ist.

Die mit Bezug auf das Verfahren zur Herstellung von Zement, insbesondere Weißzement, beschriebenen Vorteile und Erläuterungen treffen in vorrichtungsmäßiger Entsprechung auf die Anlage zur Herstellung von Zement, insbesondere Weißzement zu.

Der Klassierungseinrichtung ist gemäß einer Ausführungsform zumindest eine Kühlstufe zur Kühlung des Feinguts nachgeschaltet. Bei der Kühlstufe handelt es sich insbesondere um einen Fliehkraftabscheider und/oder eine Sichteinrichtung. Vorzugsweise ist eine Mehrzahl von Kühlstufen, die jeweils einen Fliehkraftabscheider und/oder eine Sichteinrichtung umfassen der Klassierungseinrichtung nachgeschaltet.

Gemäß einer weiteren Ausführungsform ist der Klassierungseinrichtung eine, beispielsweise inerte, Zerkleinerungseinrichtung vorgeschaltet. Insbesondere ist der Klassierungseinrichtung eine Zerkleinerungseinrichtung, vorzugsweise eine inerte Zerkleinerungseinrichtung zur Zerkleinerung des Grobguts nachgeschaltet, die beispielsweise mit einem inerten oder reduzierendem Gas, wie Stickstoff, CO2 oder einem Rauchgas ohne Sauerstoff betrieben wird.

Die Anlage weist gemäß einer weiteren Ausführungsform einen dem Ofen vorgeschalteten Vorwärmer zum vorwärmen des Materials vor dem Eintritt in den Ofen auf. Vorzugsweise umfasst die Anlage zumindest einen Wärmetauscher, wobei die Abluft des Vorwärmers zur Erwärmung von Verbrennungsluft, wie z.B. der Abluft des Fliehkraftabscheiders und/oder der Abluft der Kühleinrichtung in den Wärmetauscher, bzw. Calcinator oder Ofen geleitet wird. Die Abluft des Fliehkraftabscheiders und/oder die Abluft der Kühleinrichtung ist vorzugsweise über eine Rekuperationsleitung mit dem Wärmetauscher und dem Calcinator bzw. Ofen verbunden.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung einer Anlage zur Herstellung von Zement gemäß einem Ausführungsbeispiel.
- Fig. 2 bis 5: zeigt eine schematische Darstellung einer Anlage zur Herstellung von Zement gemäß einem weiteren Ausführungsbeispiel.

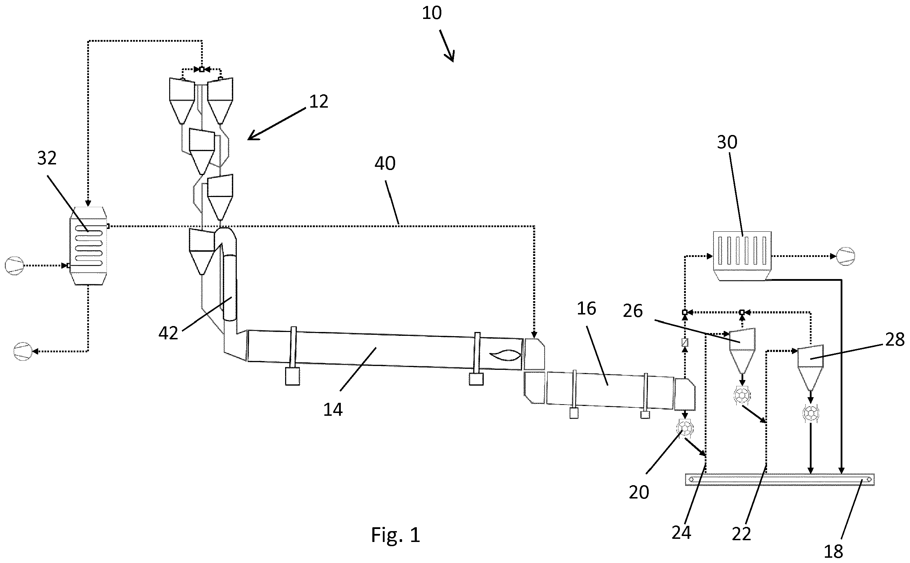

Fig. 1 zeigt eine Anlage 10 zur Herstellung von Zement mit einem Vorwärmer 12, der eine Mehrzahl von Zyklonen aufweist. Beispielhaft sind in Fig. 1 vier Zyklonstufen dargestellt, die von dem Rohmaterial durchlaufen werden. In dem Vorwärmer 12 wird das Material insbesondere vorgewärmt und entsäuert. An den Vorwärmer 12 schließt sich in Strömungsrichtung des Materials ein Ofen 14, insbesondere ein Drehrohrofen 14 an, in dem das Material zu Zementklinker gebrannt wird. Die Abgase des Ofens 14 durchströmen den Vorwärmer 12 im Gegenstrom zu der Materialströmungsrichtung, sodass eine Erwärmung des Materials erfolgt. Am Ofenaustritt weist das Material, insbesondere der gebrannte Zementklinker, eine Temperatur von etwa 1150 - 1450°C, vorzugsweise 1400°C auf. Das den Vorwärmer 12 verlassende Ofenabgas wird einem Wärmetauscher 32 zugeführt, in dem aus der Umgebung angesaugte Ofenzuluft 40 erwärmt wird.

An den Ofen 14 schließt sich in Strömungsrichtung des Materials eine inerte Kühleinrichtung 16 zur Kühlung des aus dem Ofen 14 ausgetretenen Materials an. Bei der Kühleinrichtung 16 handelt es sich beispielsweise um eine Kühltrommel, in der das Material mittels Wassereinspritzung gekühlt wird. Die Kühleinrichtung 16 kühlt das Material in einer inerten Atmosphäre, wobei kein oder nur ein sehr geringer Anteil an Sauerstoff in der Kühleinrichtung 16 vorhanden ist. Die Kühlung des Materials in der Kühleinrichtung 16 erfolgt über den Kontakt des Materials mit dem Wasser. In der inerten Kühleinrichtung 16 wird das Material auf eine Temperatur von etwa 400°C bis 700°C, insbesondere 500°C bis 600°C abgekühlt. Beim Austritt des Materials aus der Kühleinrichtung 16 weist dieses eine Temperatur auf, bei welcher eine Oxidation, insbesondere des Eisenanteils des Materials, bei einer weiteren Kühlung ausgeschlossen oder sehr gering ist. Ein Verlust an Weiße des Materials, insbesondere des Feinguts wird dadurch ausgeschlossen oder stark vermindert.

Im Anschluss an die inerte Kühleinrichtung 16 ist ein Luftabschlussorgan, wie eine Zellenradschleuse 20 angeordnet, die mit einer Klassierungseinrichtung 24 in Verbindung steht, in welcher eine Klassierung des abgekühlten Materials in zumindest zwei Korngrößen, nämlich einen Anteil an Feingut und einen Anteil an Grobgut, erfolgt. Bei der Klassierungseinrichtung 24 handelt es sich beispielsweise um einen Schwerkraftsichter, wobei das Material mit einem Gasstrom beaufschlagt wird, sodass das insbesondere flugfähige Feingut von dem insbesondere nicht flugfähigen Grobgut getrennt wird. Beispielsweise wird das Material in einer senkrechten Rohrleitung im Gegenstrom mit einem Gasstrom beaufschlagt, wobei das schwerere Grobgut gegen den Gasstrom und das Feingut mit dem Gasstrom die Rohrleitung verlässt. Es ist ebenfalls denkbar, die Klassierungseinrichtung 22 als einen dynamischen oder statischen Sichter auszuführen. Das Feingut weist beispielsweise ein Korngröße von 0-1000 µm, vorzugsweise 0 µm bis 500 µm und das Grobgut eine Korngröße von mehr als 250 µm, vorzugsweise mehr als 500 µm auf.

Insbesondere weist das Feingut nach dem Kühlen in der inerten Kühleinrichtung 16 eine Temperatur von etwa 400°C bis 700°C, insbesondere 500°C bis 600°C auf, wobei die Kerntemperatur der größeren Körner des Grobguts oberhalb von etwa 700°C liegen können, sodass eine weitere inerte Behandlung unter Ausschluss von Sauerstoff des Grobguts notwendig sein kann.

Zwischen der Klassierungseinrichtung 22 und der Kühleinrichtung 16 ist ein Verschlussorgan wie eine Zellenradschleuse 20 angeordnet, die einen Luftabschluss zwischen Kühleinrichtung 16 und Klassierungseinrichtung 24 sowie einen gleichmäßigen Materialeintrag von der Kühleinrichtung 16 in die Klassierungseinrichtung 24 ermöglicht.

Das in der Klassierungseinrichtung 24 klassierte Grobgut wird auf eine Fördereinrichtung 18 geleitet, bei der es sich beispielsweise um ein Förderband oder eine Schurre handelt. Das von der Klassierungseinrichtung 24 klassierte Feingut wird mit dem Gasstrom der Klassierungseinrichtung 24 zu einem ersten Fliehkraftabscheider 26 geleitet. Der Gasstrom der Klassierungseinrichtung 24 weist vorzugsweise eine Temperatur auf, die geringer ist als die des aus der Kühleinrichtung 16 austretenden Feinguts, sodass in der Klassierungseinrichtung und bei dem Transport des Feinguts in dem Gasstrom zu dem ersten Fliehkraftabscheider 26 eine Kühlung des Feinguts mittels des Gasstroms erfolgt. In dem Fliehkraftabscheider, insbesondere Zyklonabscheider, wird der Gasstrom von dem Feingut getrennt. Das Feingut wird von dem ersten Fliehkraftabscheider 26, vorzugsweise über eine Zellradschleuse zur Vergleichmäßigung des Materialstroms, an eine weitere Klassierungseinrichtung 22 geleitet. Bei der weiteren Klassierungseinrichtung 22 handelt es sich um einen Sichter, wobei das Material mit einem Gasstrom beaufschlagt wird, sodass das insbesondere flugfähige Feingut von dem insbesondere nicht flugfähigen Grobgut getrennt wird. In der weiteren Klassierungseinrichtung 22 wird die Strömungsgeschwindigkeit des Gasstroms beispielsweise derart eingestellt, insbesondere erhöht, dass die Korngröße des auf die Fördereinrichtung 18 gegen den Gasstrom fallende Grobgut geringer als die Korngröße des Grobguts der vorgeschalteten Klassierungseinrichtung 24 ist. Es ist ebenfalls denkbar, dass in der weiteren Klassierungseinrichtung 22 im Wesentlichen eine Kühlung des Feinguts erfolgt, wobei nahezu das gesamte den ersten Fliehkraftabscheider 26 verlassende Feingut mittels des Gasstroms der weiteren Klassierungseinrichtung 22 zu dem zweiten Fliehkraftabscheider 28 transportiert wird. In dem zweiten Fliehkraftabscheider 28 wird der Gasstrom von dem Feingut getrennt, wobei es sich bei dem zweiten Fliehkraftabscheider 28 beispielsweise um einen Zyklonabscheider handelt.

Das den zweiten Fliehkraftabscheider 28, insbesondere über eine Zellradschleuse, verlassende Feingut fällt schwerkraftbedingt auf die Fördereinrichtung 18 und wird beispielsweise zusammen mit dem Grobgut verarbeitet. Das Feingut weist im Anschluss an den zweiten Fliehkraftabscheider 28 eine Temperatur von etwa 100°C bis 200°C, insbesondere 150°C - 180°C auf.

Des Weiteren ist es denkbar, das den zweiten Schwerkraftabscheider 28 verlassende Feingut auf eine nicht dargestellte weitere Fördereinrichtung zu leiten, sodass die anschließende Verarbeitung des Grobguts getrennt von dem Feingut erfolgt. Bei dem Feingut handelt es sich nach dem Verlassen des zweiten Fliehkraftabscheiders 28 insbesondere um Fertiggut, wobei das Grobgut einer weiteren Verarbeitung, wie beispielsweise Zerkleinerung und Kühlung bedarf. Beispielsweise wird das Grobgut in einer nicht dargestellten gegebenenfalls inerten Zerkleinerungseinrichtung unter Ausschluss von Sauerstoff zerkleinert und anschließend in einer weiteren inerten Kühleinrichtung auf eine Temperatur von etwa 400°C bis 700°C, insbesondere 500°C bis 600°C abkühlt, bei welcher keine weitere Oxidation des Materials erfolgt.

Der den ersten und den zweiten Fliehkraftabscheider 26, 28 verlassende Gasstrom wird zusammen mit der Kühlerabluft einem Filter 30 zugeführt und in diesem entstaubt. Der in dem Filter abgeschiedene Staub wird der Fördereinrichtung 18 zugeführt und zusammen mit dem Grobgut und dem Feingut gefördert.

Eine Kühlung des Feinguts getrennt von der Kühlung des Grobguts bietet den Vorteil einer Ersparnis von zur Kühlung des Materials aufzubringenden Energie verglichen mit der gemeinsamen Kühlung des Grobguts und des Feinguts. Auch ist es möglich, eine kleinere Kühleinrichtung 16 zur inerten Kühlung des Materials zu verwenden, da eine inerte Kühlung des Feinguts lediglich bis auf eine Temperatur von etwa 400°C bis 700°C, insbesondere 500°C bis 600°C erfolgt, wobei die anschließende Kühlung des Feinguts mit einem Gasstrom, insbesondere einem Luftstrom, erfolgt.

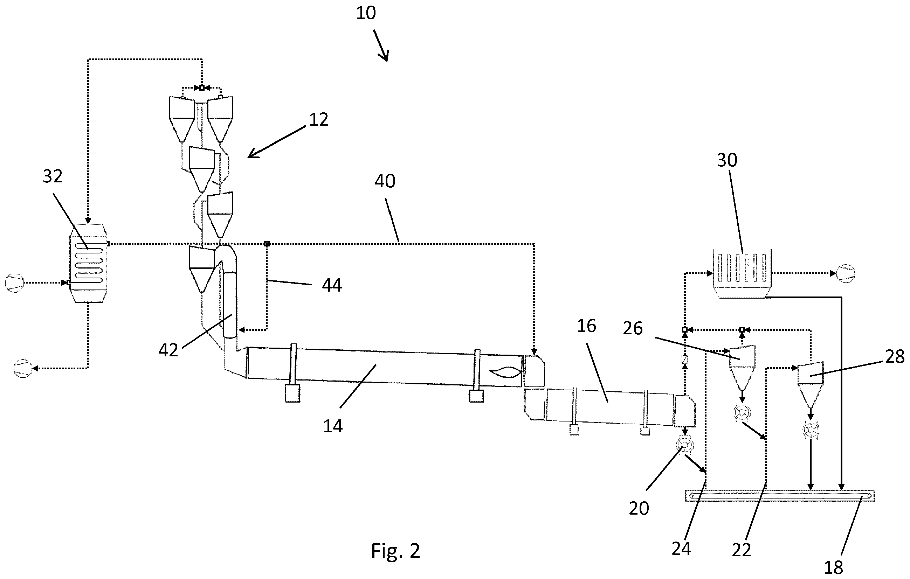

Fig. 2 zeigt eine Anlage 10 zur Herstellung von Zement, die im Wesentlichen der mit Bezug auf Fig. 1 beschriebenen Anlage entspricht. Im Unterschied zu der Anlage 10 der Fig. 1 weist die Anlage der Fig. 2 einen Calcinator 42 und eine Leitung 44 auf, die von der Ofenluftzufuhr 40 abzweigt und in dem Wärmetauschers 32 erwärmte Luft dem Calcinator 42 zuführt. Der Calcinator 42 hat den Zweck, einen hohen Vorentsäuerungsgrad des Rohmehls zu erzielen und den Ofen zu entlasten, indem auch im Calcinator Brennstoff verbrannt wird. Hierfür ist die Zufuhr von separater Verbrennungsluft notwendig.

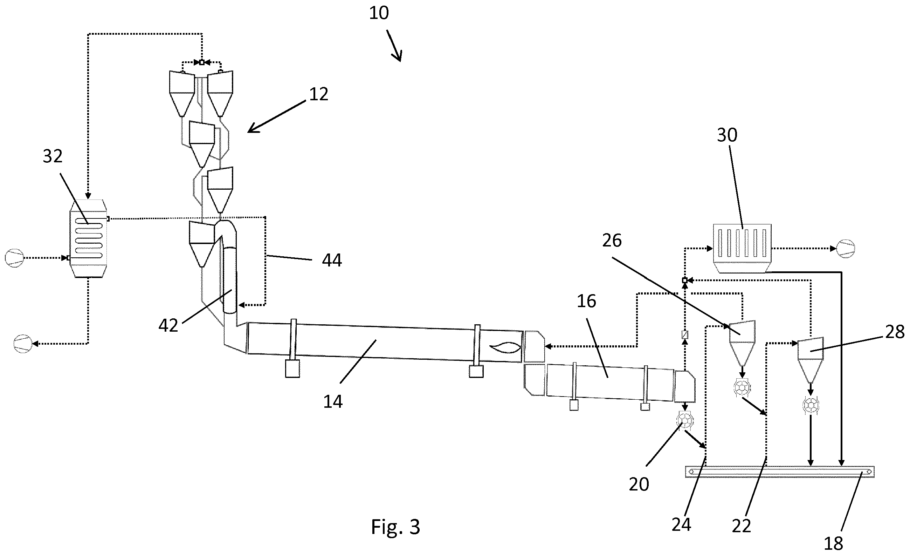

Fig. 3 zeigt eine Anlage 10 zur Herstellung von Zement, die im Wesentlichen der mit Bezug auf Fig. 1 und 2 beschriebenen Anlage entspricht. Im Unterschied zu der Anlage 10 der Fig. 1 und 2 weist die Anlage der Fig. 3 keine Ofenluftzufuhr 40 auf, die mittels des Wärmetauschers 32 erwärmte Luft dem Ofen 14 zuführt. Die mittels des Wärmetauschers 32 erwärmte Luft wird lediglich über die Leitung 44 dem Calcinator 42 zugeführt. Zusätzlich unterscheidet sich die Anlage 10 der Fig.3 von den Fig. 1 und 2 dadurch, dass der den Fliehkraftabscheider 26 verlassende Gasstrom dem Ofen 14 zugeführt wird, wobei der den zweiten Fliehkraftabscheider 28 verlassende Gasstrom dem Filter 30 zugeführt wird.

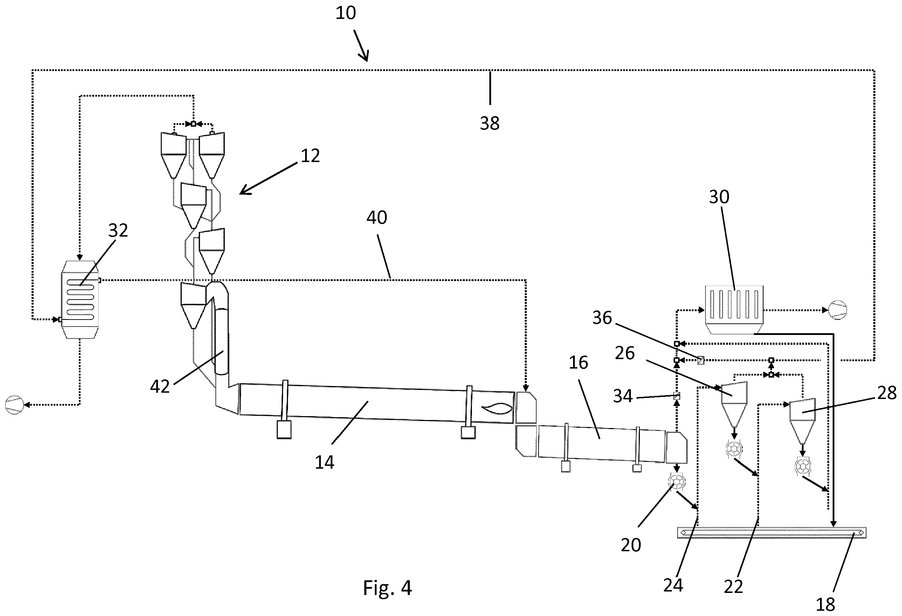

Fig. 4 zeigt eine Anlage 10 zur Herstellung von Zement, die im Wesentlichen der mit Bezug auf Fig. 1 beschriebenen Anlage entspricht. Im Unterschied zu der Anlage 10 der Fig. 1 weist die Anlage der Fig. 4 eine Rekuperationsleitung 38 auf, in der die an dem ersten und dem zweiten Fliehkraftabscheider 26, 28 abgeschiedene Abluft zu einem Wärmetauscher 32 geführt wird. In dem Wärmetauscher 32 wird der in der Rekuperationsleitung 38 geführte Gasstrom durch das den Vorwärmer 12 verlassende Ofenabgas erwärmt und anschließend als vorgewärmte Ofenzuluft 40 dem Ofen 14 zugeführt wird.

Die Zufuhr der Kühlerabluft und der Abluft des ersten und des zweiten Fliehkraftabscheiders 26, 28 zu dem Filter 30 wird jeweils über eine Klappe 34 und 36 geregelt, sodass je nach Luftbedarf des Ofensytems eine Entstaubung in dem Filter 30 erfolgt. Der in dem Filter 30 abgeschiedene Staub wird zu der Fördereinrichtung 18 geleitet und mit dem Grobgut und dem Feingut weiter verarbeitet. Es ist ebenfalls denkbar, den abgeschiedenen Staub dem Feingut zuzuführen, das getrennt von dem Grobgut gefördert wird.

Im Anschluss an den zweiten Fliehkraftabscheider 28 wird das Feingut in Fig. 4 zur weiteren Kühlung mittels einer Gasleitung 48 zu dem Filter 30 transportiert und in diesem von dem Gasstrom getrennt.

In den Figuren 1 bis 5 sind beispielhaft zwei Fliehkraftabscheider 26, 28 zur Kühlung und Abscheidung des Feinguts dargestellt, wobei es ebenfalls denkbar ist lediglich einen Fliehkraftabscheider oder eine Mehrzahl, beispielsweise drei, vier oder fünf Fliehkraftabscheider in Reihe oder parallel zueinander anzuordnen.

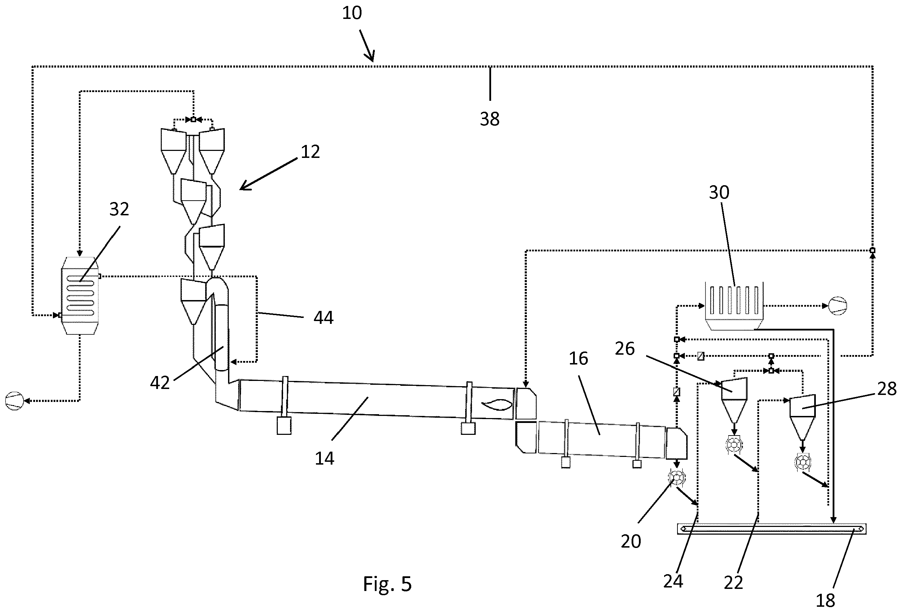

Fig. 5 zeigt eine Anlage 10 zur Herstellung von Zement, die im Wesentlichen der mit Bezug auf Fig. 4 beschriebenen Anlage entspricht. Im Unterschied zu der Anlage 10 der Fig. 4 weist die Anlage der Fig. 5 keine Ofenluftzufuhr 40 auf, die mittels des Wärmetauschers 32 erwärmte Luft dem Ofen zuführt. Die mittels des Wärmetauschers 32 erwärmte Lift wird lediglich dem Calcinator 42 zugeführt. Ein weiterer Unterschied zu der Anlage 10 der Fig.4 besteht darin, dass die Rekuperationsleitung 38 eine Abzweigung 46 aufweist, die in der Rekuperationsleitung 38 geführtes Gas dem Ofen 14 zuführt.

### Bezugszeichenliste

- 10: Anlage zur Herstellung von Zement
- 12: Vorwärmer
- 14: Ofen
- 16: inerte Kühleinrichtung
- 18: Fördereinrichtung
- 20: Zellenradschleuse
- 22: Klassierungseinrichtung
- 24: Klassierungseinrichtung
- 26: Fliehkraftabscheider
- 28: Fliehkraftabscheider
- 30: Filter
- 32: Wärmetauscher
- 34: Klappe
- 36: Klappe
- 38: Rekuperationsleitung
- 40: Ofenzuluft
- 42: Calcinator
- 44: Leitung
- 46: Abzweigung
- 48: Gasleitung

## Patentansprüche

1. Verfahren zur Herstellung von Zement, aufweisend zumindest die folgenden Schritte:
- thermisches Behandeln von Material in einem Ofen (14) und
- Kühlen des Materials in inerter Atmosphäre in einer Kühleinrichtung (16)
**dadurch gekennzeichnet, dass**
das Material im Anschluss an die inerte Kühlung in einer Klassierungseinrichtung (22, 24) in zumindest zwei Korngrößen, Grobgut und Feingut klassiert wird und wobei das Feingut im Anschluss an das Klassieren separat von dem Grobgut gekühlt wird.

2. Verfahren nach Anspruch 1, wobei die Kühlung des Feinguts im Anschluss an das Klassieren in einem Fliehkraftabscheider (26, 28), und/ oder einer Sichteinrichtung erfolgt.

3. Verfahren nach einem der vorangehenden Ansprüche, wobei die Klassierung eine Kühlung des Feinguts mittels Kühlluft umfasst.

4. Verfahren nach einem der vorangehenden Ansprüche, wobei die Kühlung des Feinguts im Anschluss an das Klassieren in zumindest zwei Kühlstufen erfolgt, wobei jede Kühlstufe einen Fliehkraftabscheider (26, 28) und/ oder eine Sichteinrichtung umfasst.

5. Verfahren nach einem der vorangehenden Ansprüche, wobei das Material vor dem Klassieren zerkleinert wird.

6. Verfahren nach einem der vorangehenden Ansprüche oder einem der Ansprüche 2 oder 4, wobei die Abluft des zumindest einen Fliehkraftabscheiders (26, 28) und/ oder die Abluft der Kühleinrichtung (16) einem Wärmetauscher (32) zugeführt und in dem Wärmetauscher (32) erwärmt werden.

7. Verfahren nach Anspruch 6, wobei das Material vor der thermischen Behandlung in dem Ofen (14) in einem Vorwärmer (12) erwärmt wird und das Abgas des Vorwärmers (12) dem Wärmetauscher (32) zur Erwärmung der Abluft des Fliehkraftabscheiders (26, 28) und/ oder der Abluft der Kühleinrichtung (16) zugeführt wird.

8. Anlage zur Herstellung von Zement, aufweisend einen Ofen (14) zur thermischen Behandlung eines Materials und eine in Strömungsrichtung des Materials dem Ofen (14) nachgeschaltete inerte Kühleinrichtung (16) zur Kühlung des Materials in inerter Atmosphäre,
**dadurch gekennzeichnet, dass**
der Kühleinrichtung (16) eine Klassierungseinrichtung (22, 24) nachgeschaltet ist zum Klassieren des Materials in zumindest zwei Korngrößen, Grobgut und Feingut und wobei der Klassierungseinrichtung (22, 24) zumindest eine Kühlstufe zur Kühlung des Feinguts separat von dem Grobgut nachgeschaltet ist.

9. Anlage nach Anspruch 8, wobei die Kühlstufe zumindest einen Fliehkraftabscheider (26, 28) und/ oder eine Sichteinrichtung (22, 24) umfasst.

10. Anlage nach einem der Ansprüche 8 oder 10, wobei der Klassierungseinrichtung (22, 24) eine Zerkleinerungseinrichtung vorgeschaltet ist.

11. Anlage nach einem der Ansprüche 8 bis 11, wobei die Klassierungseinrichtung (22, 24) eine Sichteinrichtung, einen statischen und/ oder dynamischen Sichter, umfasst.

12. Anlage nach einem der Ansprüche 8 bis 12, wobei ein dem Ofen (14) vorgeschalteter Vorwärmer (12) zum Vorwärmen des Materials vor dem Eintritt in den Ofen (14) vorgesehen ist und ein Wärmetauscher (32) angeordnet ist, der mit der Abluft des Vorwärmers zur Erwärmung der Abluft des Fliehkraftabscheiders (26, 28) und/oder der Abluft der Kühleinrichtung (16) verbunden ist.

## Claims

1. Method for producing cement, having at least the following steps of:
- thermally treating material in a furnace (14) and
- cooling the material in an inert atmosphere in a cooling device (16),
**characterized in that**
the material, following the inert cooling, is classified into at least two grain sizes, coarse material and fine material, in a classifying device (22, 24), and wherein the fine material is cooled separately from the coarse material following the classification.

2. Method according to Claim 1, wherein the cooling of the fine material following the classification takes place in a centrifugal separator (26, 28) and/or a screening device.

3. Method according to either of the preceding claims, wherein the classification encompasses cooling of the fine material by means of cooling air.

4. Method according to one of the preceding claims, wherein the cooling of the fine material following the classification takes place in at least two cooling stages, wherein each cooling stage comprises a centrifugal separator (26, 28) and/or a screening device.

5. Method according to one of the preceding claims, wherein the material is comminuted before classification.

6. Method according to one of the preceding claims or one of Claims 2 and 4, wherein the exhaust air from the at least one centrifugal separator (26, 28) and/or the exhaust air from the cooling device (16) is fed to a heat exchanger (32) and is heated in the heat exchanger (32).

7. Method according to Claim 6, wherein, before the thermal treatment in the furnace (14), the material is heated in a preheater (12) and the exhaust gas from the preheater (12) is fed to the heat exchanger (32) to heat the exhaust air from the centrifugal separator (26, 28) and/or the exhaust air from the cooling device (16).

8. Plant for producing cement, having a furnace (14) for the thermal treatment of a material, and an inert cooling device (16), connected downstream of the furnace (14) in the direction of flow of the material, for cooling the material in an inert atmosphere,
**characterized in that**
downstream of the cooling device (16) there is connected a classifying device (22, 24) for classifying the material into at least two grain sizes, coarse material and fine material, and wherein downstream of the classifying device (22, 24) there is connected at least one cooling stage for cooling the fine material separately from the coarse material.

9. Plant according to Claim 8, wherein the cooling stage comprises at least one centrifugal separator (26, 28) and/or one screening device (22, 24).

10. Plant according to either of Claims 8 and 10, wherein a comminuting device is connected upstream of the classifying device (22, 24).

11. Plant according to one of Claims 8 to 11, wherein the classifying device (22, 24) comprises a screening device, a static and/or dynamic screen.

12. Plant according to one of Claims 8 to 12, wherein a preheater (12), connected upstream of the furnace (14), for preheating the material before it enters the furnace (14) is provided, and a heat exchanger (32) is arranged, which is connected to the exhaust air from the preheater in order to heat the exhaust air from the centrifugal separator (26, 28) and/or the exhaust air from the cooling device (16).

## Revendications

1. Procédé de fabrication de ciment, comprenant au moins les étapes suivantes :
- traiter thermiquement le matériau dans un four (14) et
- refroidir le matériau dans une atmosphère inerte dans un dispositif de refroidissement (16),
**caractérisé en ce que**
après le refroidissement inerte, le matériau est calibré en au moins deux tailles de grain, produit grossier et produit fin, dans un dispositif de calibrage (22, 24), et le produit fin étant refroidi séparément du produit grossier après le calibrage.

2. Procédé selon la revendication 1, le refroidissement du produit fin étant effectué après le calibrage dans un séparateur centrifuge (26, 28) et/ou un dispositif de tamisage.

3. Procédé selon l'une des revendications précédentes, le calibrage comprenant le refroidissement du produit fin par de l'air de refroidissement.

4. Procédé selon l'une des revendications précédentes, le refroidissement du produit fin étant effectué dans au moins deux étages de refroidissement après le calibrage, chaque étage de refroidissement comprenant un séparateur centrifuge (26, 28) et/ou un dispositif de tamisage.

5. Procédé selon l'une des revendications précédentes, le matériau étant broyé avant le calibrage.

6. Procédé selon l'une des revendications précédentes ou l'une des revendications 2 et 4, l'air d'évacuation de l'au moins un séparateur centrifuge (26, 28) et/ou l'air d'évacuation du dispositif de refroidissement (16) étant amenés à un échangeur de chaleur (32) et étant chauffés dans l'échangeur de chaleur (32).

7. Procédé selon la revendication 6, le matériau étant chauffé dans un préchauffeur (12) avant le traitement thermique dans le four (14) et les effluents gazeux du préchauffeur (12) étant amenés à l'échangeur de chaleur (32) pour chauffer l'air d'évacuation du séparateur centrifuge (26, 28) et/ou l'air d'évacuation du dispositif de refroidissement (16).

8. Installation de production de ciment, comprenant un four (14) destiné au traitement thermique d'un matériau et un dispositif de refroidissement inerte (16) situé en aval du four (14) dans le sens d'écoulement du matériau pour refroidir le matériau en atmosphère inerte,
**caractérisé en ce que**
un dispositif de calibrage (22, 24) étant monté en aval du dispositif de refroidissement (16) pour calibrer le matériau en au moins deux tailles de grain, produit grossier et produit fin, et au moins un étage de refroidissement étant monté en aval du dispositif de calibration (22, 24) pour refroidir le produit fin séparément du produit grossier.

9. Installation selon la revendication 8, l'étage de refroidissement comprenant au moins un séparateur centrifuge (26, 28) et/ou un dispositif de tamisage (22, 24).

10. Installation selon l'une des revendications 8 et 10, un dispositif de broyage étant monté en amont du dispositif de calibrage (22, 24).

11. Installation selon l'une des revendications 8 à 11, le dispositif de calibrage (22, 24) comprenant un dispositif de tamisage, un tamiseur statique et/ou dynamique.

12. Installation selon l'une des revendications 8 à 12, un préchauffeur (12) monté en amont du four (14) étant prévu pour préchauffer le matériau avant d'entrer dans le four (14) et un échangeur de chaleur (32) étant disposé qui est lié à l'air d'évacuation du préchauffeur pour chauffer l'air d'évacuation du séparateur centrifuge (26, 28) et/ou l'air d'évacuation du dispositif de refroidissement (16).
